# EUROPÄISCHE PATENTSCHRIFT

(11) **EP 3 033 612 B1**
(45) Veröffentlichungstag und Bekanntmachung des Hinweises auf die Patenterteilung: **24.05.2017**
(21) Anmeldenummer: 14758312.4
(22) Anmeldetag: 20.08.2014
(51) Int. Cl.: G01N 21/57, G01N 21/88, G01B 11/25

(54) **VORRICHTUNG UND VERFAHREN ZUR ERFASSUNG EINER ZUMINDEST TEILWEISE SPIEGELNDEN OBERFLÄCHE**
DEVICE AND METHOD FOR DETECTING AT LEAST ONE PARTIALLY REFLECTIVE SURFACE
DISPOSITIF ET PROCÉDÉ DE DÉTECTION D'UNE SURFACE AU MOINS PARTIELLEMENT RÉFLÉCHISSANTE

(30) Priorität: 21.08.2013 DE 102013216566
(43) Veröffentlichungstag der Anmeldung: 22.06.2016
(60) Teilanmeldung: 17161933.1
(73) Patentinhaber: Fraunhofer-Gesellschaft zur Förderung der angewandten Forschung e.V., 80686 München (DE)
(72) Erfinder: KOSTKA, Günther, 91056 Erlangen (DE); SCHMITT, Peter, 91058 Erlangen (DE); HÜGEL, Christian, 90768 Fürth (DE); SEIFERT, Lars, 92318 Neumarkt (DE)
(74) Vertreter: Schenk, Markus
(86) Internationale Anmeldenummer: PCT/EP2014/067733
(87) Internationale Veröffentlichungsnummer: WO 2015/024963

(56) Entgegenhaltungen:
- EP-A1- 1 837 623
- EP-A1- 1 925 908
- EP-A1- 1 995 083
- DE-A1- 10 127 304
- DE-A1- 19 821 059
- DE-A1- 19 944 354
- DE-A1-102005 044 912
- DE-A1-102005 058 873
- DE-A1-102006 030 273
- DE-A1-102010 015 566
- DE-B3-102004 020 419
- Stefan Bruno Werling: "Deflektometrie zur automatischen Sichtprüfung und Rekonstruktion spiegelnder Oberflächen", 2011, KIT Scientific Publishing, Karlsruhe, Deutschland, XP002733166, ISBN: 978-3-86644-687-8 Bd. 3, Seiten 77-135, Seiten 77-113; Abbildung 5.4 Seiten 128-135

## Beschreibung

Die vorliegende Erfindung bezieht sich auf eine Vorrichtung zur Erfassung von zumindest teilweise spiegelnden Oberflächen und ein Verfahren zur Erfassung derselben.

Aus wirtschaftlichen Gründen kommen zur Überprüfung von glänzenden oder hochglänzenden Oberflächen, wie etwa von Leichtmetallrädern, auf Oberflächenfehler, wie beispielsweise Dellen, Beulen, Lacktropfen oder -beulen, Kratzer oder Riefen, hauptsächlich berührungslose Messverfahren zum Einsatz. Die Oberflächenfehler werden im industriellen Funktionsbereich typischerweise mit optischen Aufnahmeverfahren erfasst und detektiert.

Eine Formvermessung kann bei genügend kooperativen, d.h. diffus streuenden Oberflächen auch durch eine optische Abtastung, beispielsweise durch optische Triangulationsverfahren, erfolgen. Mit optischen Triangulations-Methoden, wie beispielsweise einem Laser-Lichtschnitt-Verfahren können Oberflächen erfasst und vermessen werden, die einen genügend hohen diffusen Streuanteil aufweisen. Für stark oder sehr stark glänzende Oberflächen sind diese Verfahren zumeist ungeeignet. Sie haben zudem ein begrenztes räumliches Auflösungsvermögen und sind nicht bzw. kaum sensitiv, d.h. empfindlich bezüglich geringer lokaler Neigungsunterschiede der Oberflächen, wie sie beispielsweise an oben genannten Oberflächenfehlern von Leichtmetallrädern auftreten.

Die Qualitätsüberprüfung bezüglich Oberflächenfehler von spiegelnden Oberflächen, wie etwa an Leichtmetallfelgen, beispielsweise Lackfehler, Gießfehler, mechanische Beschädigungen oder Einschlüsse im Material, wird bisher mangels alternativer Prüfverfahren meist durch eine visuelle Inspektion durch menschliche Prüfer durchgeführt. Diese visuelle Inspektion kann sehr zeit- und/oder kostenintensiv sein. Zudem ist eine solche visuelle Inspektion subjektiv und ggf. nicht sicher reproduzierbar und/oder quantifizierbar. Durch Ermüdung oder schwankende Konzentrationsfähigkeit des menschlichen Prüfers kann die Gefahr von Fehler-Schlupf bestehen.

Diese Oberflächenfehler sind für den menschlichen Betrachter aufgrund einer lokalen Variation des gespiegelten Umgebungslichts sichtbar. Kleine oder sehr kleine Lackfehler mit einer geringen Höhenausdehnung, bspw. im Mikrometerbereich, sind mit dem Laser-Lichtschnitt-Verfahren unter Umständen nicht sicher zu erfassen. Deflektometrie-Methoden sind geeignet, vor allem stark reflektierende Oberflächen bezüglich ihrer Form, des lokalen Neigungswinkels und Oberflächenfehlern zu erfassen und/oder die Form der Oberfläche zu vermessen. Typischerweise wird hierzu eine Folge von Hell-Dunkel-Streifen auf einer flächenhaften Lichtquelle, beispielsweise einem Leuchtschirm, erzeugt und mittels einer Flächen-Kamera in Reflexion über die spiegelnde Oberfläche sequentiell abgebildet. Der Verlauf des Streifenmusters in den sequentiell aufgenommenen Kamerabildern hängt von der lokalen und globalen Form, d.h. der Position und der Neigung der Oberfläche ab und kann automatisch, d.h. per Computer-Programm aus der aufgenommenen Bildsequenz ausgewertet werden. Unter der Voraussetzung, dass die Anordnung von Kamera, Objekt (Oberfläche) und Lichtquelle kalibriert ist, kann die dreidimensionale Form der Oberfläche im Zuge der Auswertung rekonstruiert werden. Eine Auswertung von lokalen Formabweichungen kann ggf. auch ohne einen vollständig kalibrierten Aufbau und/oder Rekonstruktionsalgorithmus erreicht werden.

Bei der Deflektometrie-Methode muss für jeden aufzunehmenden Oberflächenbereich eine Bildsequenz über eine Flächenkamera aufgenommen werden, wobei sich die relative Position zwischen Kamera, Oberfläche und Leuchtschirm im Normalfall während einer Aufnahme nicht ändern darf, d.h. es darf keine Relativbewegung stattfinden. Zudem müssen bei dieser Methode für die Datenverarbeitung die aufgenommenen und auszuwertenden Kamerabilder auf eine Auswerte-Einheit, beispielsweise einen Auswerte-Rechner, übertragen werden. Die Datenübertragungsrate für das Übertragen von zweidimensionalen Kamerabildern auf einen Rechner ist technisch bedingt limitiert, derzeit auf maximal ca. 100 Bilder/s, so dass das Objekt typischerweise diskontinuierlich bewegt wird und dadurch ein verminderter Prüfdurchsatz erreicht wird. Die notwendige schrittweise Positionierung des Objekts bzw. der Oberfläche gegenüber der messtechnischen Anordnung von Kamera und Leucht- oder Projektionsschirm (oder umgekehrt der messtechnischen Anordnung gegenüber dem Objekt) kann zudem bezüglich der benötigten mechanischen Komponenten, wie etwa bezüglich der zu realisierenden Verfahrachsen, aufwendig, d.h. kostenintensiv und/oder relativ langsam sein.

Für die automatische Detektion von bezüglich ihrer Flächenausdehnung oder Höhe sehr kleinen Oberflächenfehlern wird eine entsprechend hohe Pixelauflösung der Kamera sowie ein entsprechend fein aufgelöstes Streifenmuster benötigt. Aufgrund des Abtast-Theorems kann es erforderlich sein, dass eine laterale Ausdehnung des Musters, d.h. eine Streifenbreite der Ausdehnung der zu detektierenden Fehler entsprechen bzw. diese unterschreiten muss.

In DE 102004007828 A1 ist ein optisches Verfahren zur Erfassung von Oberflächen dreidimensionaler Körper beschrieben, bei dem für die Zeitdauer der jeweiligen Bildaufnahme die Oberfläche, die Beleuchtungseinrichtung und die Kamera mittels einer Bewegungseinrichtung in mindestens eine definierte geometrische Relation gebracht werden müssen, um eine gleichbleibende Aufnahmequalität für jeden zu inspizierenden Bereich und eine hohe Erkennungsrate für Fehler zu erzielen. Während der Belichtungs- bzw. Aufnahmezeit der Kamera darf keine Relativbewegung zwischen Kamera, Oberfläche und Beleuchtungseinrichtung stattfinden. Das bedeutet, dass die Erfassung der gesamten Oberfläche schrittweise, d.h. ein Oberflächenbereich nach dem anderen, erfolgen muss, wodurch ein verringerter Prüfdurchsatz erzielt wird, da zwischen den einzelnen Aufnahmen die Anordnung von Oberfläche, Kamera und Beleuchtung jeweils neu positioniert werden muss.

Die Aufgabe der vorliegenden Erfindung besteht deshalb darin, eine Vorrichtung und ein automatisierbares Verfahren zur Erfassung von zumindest teilweise spiegelnden Oberflächen zu schaffen, das eine Oberflächenüberprüfung mit einem erhöhten Prüfdurchsatz bei zumindest teilweise spiegelnden Oberflächen ermöglicht.

Diese Aufgabe wird durch den Gegenstand der unabhängigen Patentansprüche gelöst.

Der Kerngedanke der vorliegenden Erfindung besteht darin, erkannt zu haben, dass obige Aufgabe dadurch gelöst werden kann, dass durch eine Projektion eines Musters per Spiegelung über die zumindest teilweise spiegelnde Oberfläche auf eine Detektionsfläche ein erfassbares oder auswertbares Abbild des Musters auf der Detektionsfläche geschaffen werden kann, so dass das Abbild des Musters auf der Detektionsfläche Rückschlüsse auf Oberflächenfehler ermöglicht.

Gemäß einem Ausführungsbeispiel projiziert eine Beleuchtungseinrichtung ein Muster in Richtung einer zumindest teilweise spiegelnden Oberfläche, welche das Muster spiegelt, so dass das Muster auf eine Detektionsfläche projiziert wird. Eine Erfassungseinheit ist ausgebildet, um das auf die Detektionsfläche projizierte Muster zu erfassen.

Vorteilhaft an dieser Ausführungsform ist, dass ein Oberflächenfehler der zumindest teilweise spiegelnden Oberfläche dadurch erkannt werden kann, dass ein durch den Oberflächenfehler veränderter Neigungswinkel der Oberfläche zu einer veränderten Projektion des Musters auf der Detektionsfläche führen kann, diese Veränderung feststellbar und der Oberflächenfehler somit detektierbar ist. Ferner kann die visuelle Prüfung durch eine automatische Inspektion ergänzt werden und in einer kontinuierlichen Form durchgeführt werden, so dass auf eine schrittweise Positionierung der Messgeräte oder der Prüfoberfläche verzichtet werden kann.

Gemäß einem alternativen Ausführungsbeispiel emittiert die Beleuchtungseinheit ein ultraviolettes oder extrem ultraviolettes Licht, welches an der Detektionsfläche durch phosphoreszierende oder fluoreszierende Eigenschaften der Detektionsfläche in einen sichtbaren Bereich verschoben wird, für den Kameras empfindlicher sind. Vorteilhaft an dieser Ausführungsform ist, dass durch den Einsatz ultravioletter oder extrem ultravioletter Beleuchtung eine geringe Wellenlänge der Beleuchtung für eine hohe Auflösung bezüglich der Oberflächenfehler auf untersuchten Oberfläche genutzt werden kann.

Weitere vorteilhafte Ausführungsformen sind der Gegenstand der abhängigen Patentansprüche. Bevorzugte Ausführungsbeispiele der vorliegenden Erfindung werden nachfolgend Bezug nehmend auf die beiliegenden Zeichnungen erläutert. Es zeigen:
- Fig. 1a: eine Vorrichtung zur Erfassung einer zumindest teilweise spiegelnden Oberfläche;
- Fig. 1b: die Vorrichtung aus Fig. 1a, bei der ein Oberflächenfehler an der zumindest teilweise spiegelnden Oberfläche detektiert wird;
- Fig. 2: eine Vorrichtung zur Erfassung von zumindest teilweise spiegelnden Oberflächen, bei der die Detektionsebene an eine Erfassungseinheit gekoppelt ist;
- Fig. 3: eine schematische Darstellung eines Vermessungssystems mit zwei Vorrichtungen zur Erfassung von zumindest teilweise spiegelnden Oberflächen;
- Fig. 4: ein Blockdiagramm eines Verfahrens zur Erfassung von zumindest teilweise spiegelnden Oberflächen.

Bevor nachfolgend Ausführungsbeispiele der vorliegenden Erfindung im Detail anhand der Zeichnungen näher erläutert werden, wird darauf hingewiesen, dass identische, funktionsgleiche oder gleichwirkende Elemente, Objekte und/oder Strukturen in den unterschiedlichen Figuren mit den gleichen Bezugszeichen versehen sind, so dass die in unterschiedlichen Ausführungsbeispielen dargestellte Beschreibung dieser Elemente untereinander austauschbar ist bzw. aufeinander angewendet werden kann.

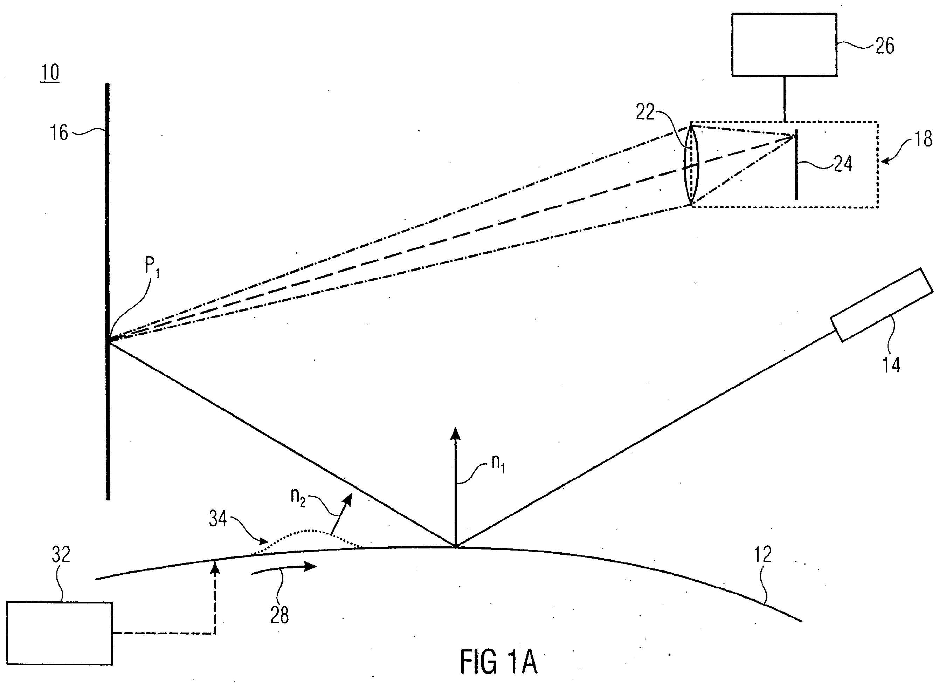

Fig. 1a zeigt eine Vorrichtung 10 zur Erfassung einer zumindest teilweise spiegelnden Oberfläche 12. Die zumindest teilweise spiegelnde Oberfläche 12 kann beispielsweise eine Oberfläche einer Leichtmetallfelge für Autoreifen oder dergleichen, ein lackiertes Blech oder eine Spiegeloberfläche sein. Ein lackiertes Blech kann ein glanz-lackiertes, transparent lackiertes, metallisch spiegelndes Blech sein. Die zumindest teilweise spiegelnde Oberfläche kann alternativ eine keramische oder Glas-Oberflächen sein, die vermessen und/oder überprüft werden soll. Alternativ ermöglicht Vorrichtung 10 beispielsweise eine Vermessung von Brillengläsern oder anderen glänzenden technischen Oberflächen.

Auch wenn sich nachfolgende Ausführungen auf teilweise spiegelnden Oberflächen 12 von Leichtmetallrädern beziehen, gelten die Ausführungen, sofern dort nicht anders erläutert, auch für andere zumindest teilweise spiegelnde Oberflächen, wie etwa die gerade genannten.

Eine Beleuchtungseinrichtung 14 ist ausgebildet, um ein Muster, wie etwa einen Lichtpunkt, eine oder mehrere Linien, ein Streifenmuster oder ein beliebiges anderes Muster, per Spiegelung an der zumindest teilweise spiegelnden Oberfläche 12 auf eine Detektionsfläche 16 zu projizieren. Eine Position oder ein Bereich P₁, an den das Muster auf die Detektionsfläche projiziert wird, ist dabei abhängig von einer lokalen Oberflächenneigung mit einer Oberflächennormalen n₁ und einem Bestrahlungswinkel zwischen der Beleuchtungseinrichtung 14 und der Oberflächennormalen n₁. Das Muster kann unter Verwendung von Licht, insbesondere Laser-Licht projiziert werden. Vorteilhaft an einem unter Verwendung von Laser projizierten Muster ist, dass aufgrund einer größeren Rayleighlänge des Lasers, bspw. gegenüber einem gebündelten Licht einer Projektionslampe, ein vergrößerter Tiefenschärfebereich des Lasers genutzt werden kann. Alternativ oder zusätzlich kann die Beleuchtungseinrichtung 14 ausgebildet sein, um eine kurzwellige oder besonders kurzwellige Strahlung, wie etwa ultraviolettes (UV) oder extrem ultraviolettes (XUV) zu emittieren, um eine besonders hochaufgelöste Abtastung der zumindest teilweise spiegelnden Oberfläche 12 zu erzielen. Eine hochfokussierte UV- oder XUV-Strahlung ermöglicht basierend auf der geringeren Wellenlänge eine hochaufgelöste Oberflächenabtastung.

Vorteilhaft an dieser Ausführungsform ist, dass ein Oberflächenfehler auf einer zumindest teilweise spiegelnden Oberfläche ggf. mit einer Vergrößerungsfunktion, an der Detektionsebene indirekt erfasst werden kann. Möglicherweise die Erfassung störende Einflüsse aufgrund von Spiegelungen an der zumindest teilweise spiegelnden Oberfläche 12 können so reduziert werden. Gleichzeitig kann Licht mit einer geringen Wellenlänge eingesetzt werden, um das Muster an die Detektionsfläche 12 zu projizieren, sodass Oberflächenfehler mit einer geringen räumlichen Ausdehnung detektierbar sind.

Bei der Beleuchtungseinrichtung 14 kann es sich bspw. um einen Linien-Projektor handeln, insbesondere einen Laser-Linien-Projektor, der einen Licht-Fächerstrahl auf die Detektionsfläche 16 projiziert. Das Muster kann aus Licht, insbesondere Laser-Licht geformt sein, welches sichtbare Wellenlängen aufweist. Alternativ oder zusätzlich kann das Licht, welches das Muster projiziert, auch andere Wellenlängen, bspw. ultraviolettes (UV) oder extrem ultraviolettes (XUV) Licht aufweisen. Das UV oder XUV-Licht kann auf oder an der Detektionsfläche in sichtbares Licht oder langwellige Strahlung umgewandelt werden, beispielsweise durch phosphoreszierende oder fluoreszierende Stoffe oder Materialien. Ein in sichtbares Licht umgewandeltes und von der Detektionsfläche 16 gestreutes UV oder XUV-Licht kann von konventionellen Silizium-basierten Kamera-Sensoren erfasst werden. Alternativ oder zusätzlich ist es möglich, für einen weiteren oder den gleichen Prüfvorgang unterschiedliche Wellenlängen einzusetzen, um beispielsweise verschiedene Tiefen- oder Prüfbereiche der zumindest teilweise spiegelnden Oberfläche 12 zu erfassen.

Die Detektionsebene 16 kann beispielsweise eine diffus streuende nicht-transparente Streufolie sein, die von einer Erfassungseinheit 18 aus einer Richtung, aus welcher das Muster auf die Detektionsfläche 16 projiziert wird (Einfallsseite), über eine konventionelle Abbildungsoptik 22 der Erfassungseinheit 18 und/oder eine Detektorfläche einer elektronischen Flächenkamera erfasst wird. Alternativ kann die Detektionsfläche 16 auch zumindest teilweise transparent sein, wie etwa eine halbtransparente Streufolie, so dass das Muster von einer der Einfallsseite abgewandten Seite der Detektionsfläche 16 erfassbar ist. So kann beispielsweise ein Muster, welches von einem UV- oder XUV-Laser auf die Detektionsfläche 16 projiziert wird durch phosphoreszierende oder fluoreszierende Stoffe an der Detektionsfläche 16 in sichtbares Licht umgewandelt und gestreut werden, so dass das Muster auf der der Einfallsseite abgewandten Seite sichtbar und mithin von der Erfassungseinheit 18 erfassbar ist, wenn diese angeordnet ist, um die der Einfallsseite abgewandte Seite der Detektionsfläche 16 zu erfassen.

Die Erfassungseinheit 18, wie etwa eine Flächen- oder Zeilenkamera, beispielsweise eine elektronische Kamera, ist ausgebildet, um die Detektionsfläche 16 zu erfassen, beispielsweise indem die Erfassungseinheit 18 eine kontinuierliche oder diskontinuierliche Abfolge von Bildern des auf die Detektionsfläche 16 projizierten Musters aufnimmt. Die Erfassungseinheit 18 weist eine Abbildungsoptik 22 und eine Detektorfläche, wie etwa einen Kamera-Chip oder einen sonstigen Bildsensor 24 auf, wobei die Abbildungsoptik 22 ausgebildet ist, einen variierenden Abstand zwischen der zumindest teilweise spiegelnden Oberfläche 12, der Beleuchtungseinrichtung 14 und/oder der Detektionsfläche 16 so zu kompensieren, dass ein fokussiertes Abbild des Musters auf den Bildsensor 24 abgebildet werden kann. Der Bildsensor (Kamera-Chip) 24 kann einen oder mehrere beispielsweise Silizium-basierte Sensoren aufweisen, insbesondere wenn das Muster in Licht sichtbarer Wellenlänge an der Detektionsfläche 16 gestreut wird. Dies kann durch die Projektion des Musters mit UV- oder XUV-Licht und einer Umwandlung des UV- oder XUV-Lichts in einen sichtbaren Bereich erfolgen.

Die Erfassungseinheit 18 kann eine 3D-Messkamera, wie etwa eine Lichtschnitt-Kamera sein. Diese können Messraten von über zehntausend Profilmessungen pro Sekunde erreichen. Durch eine sequentielle, hochfrequente Messung des Musters auf der Detektionsfläche während einer Relativbewegung 28 zwischen der Messanordnung, d.h. der Beleuchtungseinrichtung 14 und der Detektionsfläche 16 sowie der Erfassungseinheit 18, und der zumindest teilweise spiegelnden Oberfläche 12 kann sequentiell eine teilweise oder vollständige Erfassung der zumindest teilweise spiegelnden Oberfläche 12 erreicht werden. Eine Lichtschnitt-Messkamera kann eine schnelle Positionsbestimmung eines Lichtlinien-Musters bzw. der Position einer Lichtlinie auf der Detektionsfläche 16 durch die Lichtschnitt-Messkamera ermöglichen, so dass eine Datenreduktion auf dem Bildsensor 24 oder in der Erfassungseinheit 18 durchführbar ist. Dazu kann die Erfassungseinheit 18 eine lokale Auswerteeinheit umfassen, die ausgebildet ist, um bspw. das erfasste Bild spaltenweise bezüglich eines lokalen oder globalen Intensitätsmaximums auszuwerten und den oder die korrespondierenden Zeilenwerte des lokalen oder globalen Maximums als Skalar auszugeben. Insbesondere ermöglicht solch eine Positionsbestimmung eine erste Datenreduktion und mithin eine schnellere Übermittlung einzelner Bilder an die Auswerteeinrichtung 26, da anstelle von vollständigen Bildern lediglich die extrahierten Positionsinformationen übertragen werden. Zusätzlich kann eine Reihe von zusätzlichen Informationen, wie etwa eine Intensität der ausgewerteten Lichtlinie pro Messpunkt oder eine Linienbreite pro Messpunkt bereitgestellt werden. Diese zusätzlichen Informationen oder Daten können durch zusätzliche Auswerte-Schritte ausgewertet werden. So kann beispielsweise aus einer im Ortsraum hochfrequenten Änderung einer Helligkeit oder der Linienbreite in Kombination mit der Auswertung des Positionsverlaufs der Linie auf die Existenz eines Defekts geschlossen werden. Beispielsweise kann das Ausbleiben von zumindest Teilen des Musters in einem bestimmten Bereich der Detektionsfläche 16 auf einen Fehler hindeuten. Wird etwa an der zumindest teilweise spiegelnden Oberfläche 12 eine kontinuierliche Krümmung zwischen zwei zueinander geneigten Abschnitten der zumindest teilweise spiegelnden Oberfläche 12 erwartet, so kann die kontinuierliche Krümmung dazu führen, dass das Muster aufgrund der Krümmung einen bestimmten Bereich an der Detektionsfläche 16 durchwandert. Weist das Bauteil einen Fehler, bspw. einen knickartigen Übergang, zwischen den zueinander geneigten Abschnitten auf, wird das Muster möglicherweise schlagartig von einem Bereich (Erfassung des ersten Abschnitts der zumindest teilweise spiegelnden Oberfläche 12) zu einem anderen Bereich (Erfassung des gegenüber dem ersten Bereich geneigten zweiten Abschnitts) verschoben, sodass das Muster zwischen den beiden Bereichen der Detektionsfläche 16 ausbleibt. Prinzipiell kann eine Veränderung des Musters, bspw. wenn ein konstantes Muster an der Detektionsfläche 16 erwartet wird, oder eine Nicht-Veränderung des Musters, bspw. wenn eine Krümmung einer projizierten Linie des Musters erwartet wird, Rückschlüsse auf einen Oberflächenfehler ermöglichen.

Ein Fokus der Erfassungseinheit 18 ist basierend auf einem veränderlichen Abstand zwischen der Beleuchtungseinrichtung und der zumindest teilweise spiegelnden Oberfläche 12 auf die Detektionsfläche 16 bzw. das Muster justierbar.

Die Erfassungseinheit 18 kann abhängig von der jeweiligen Implementierung Bilddaten oder Lichtlinien-Positions-Messdaten erfassen. Eine Auswertung von Roh-Messdaten kann auf einer Auswerteeinheit 26, wie etwa einem Messrechner beispielsweise mittels speziell implementierter Computer-Programme erfolgen, die möglicherweise Standard-Bildverarbeitungs-Operationen oder auch speziell entwickelte Algorithmen für eine automatische Detektion von durch Oberflächenfehler verursachte Defektstrukturen oder zur Vermessung der zumindest teilweise spiegelnden Oberfläche 12 eingesetzt werden können. Eine Detektion von Defekten, wie etwa dem Oberflächenfehler 34 kann auf einer Unterscheidung zwischen langreichweitigen, d.h. großflächigen fehlerfreien Sollstrukturen und kurzreichweitigen, d.h. kleinflächigen fehlerbehafteten Strukturen erfolgen. Eine solche Unterscheidung kann beispielsweise durch eine gezielte Ortsfrequenz-Filterung und eine entsprechende Diskriminierung im Ortsfrequenzraum erfolgen. Die Unterscheidung zwischen fehlerfreien und fehlerbehafteten Strukturen kann alternativ oder zusätzlich auch mittels linearen oder nicht linearen Filteroperationen im Ortsraum erfolgen. Die Auswerteeinrichtung 26 kann ausgebildet sein, um eine Sequenz von Einzel-Profil-Daten von der Erfassungseinrichtung 18 zu empfangen und zu einer Gesamtdarstellung der erfassten Oberfläche zusammenzusetzen. Dies kann eine Bestimmung von lokalen Fehlergebieten anhand lokaler Neigungsunterschiede ermöglichen. Ferner ermöglicht die Generierung der Gesamtdarstellung eine Kalibrierung und Rekonstruktion der gesamten Oberfläche durch eine Integration der Oberflächenneigung sowie eine Vermessung der Oberfläche.

Der Einsatz von Filtern im Ortsraum kann es ermöglichen, Datenbereiche, die Objektgrenzen (wie etwa Kanten oder Knicke) beinhalten, zu berücksichtigen. Hierfür kann eine jeweilige Filtereinstellung an eine jeweilige Ausrichtung der Objektgrenze angepasst sein oder werden, so dass eine fehlerbehaftete oder Artefakt-behaftete Auswertung von Daten, beispielsweise durch den Messrechner 26, an diesen Objektgrenzen vermieden werden kann. Beispielsweise können Objektgrenzen bei einer Leichtmetallfelge Kanten zwischen Lauf- und Seitenflächen oder durch Speichen der Leichtmetallfelgen ausgebildete Kanten der Seitenfläche sein.

Die Beleuchtungseinrichtung 14 projiziert das Muster auf die zumindest teilweise spiegelnde Oberfläche 12. Das spekular, d.h. spiegelnd reflektierte Muster bzw. Licht wird auf die Detektionsfläche 16 projiziert und dort zumindest teilweise diffus reflektiert oder gestreut, so dass das Muster von der Erfassungseinheit 18 über die Abbildungsoptik 22 auf den Bildsensor 24 abgebildet und die Position des Musters beispielsweise spaltenweise auf dem Bildsensor 24 ausgewertet werden kann.

Eine derart erhaltene Information über die Position P₁ des Musters an der Detektionsfläche 16 kann beispielsweise in Form eines profilartigen Positionsverlaufs zu einer Auswerteeinrichtung 26 übermittelt oder diesem bereitgestellt werden.

Die Auswerteeinrichtung 26 kann bspw. ein Messrechner sein, der ausgebildet ist, erhaltene oder bereitgestellte Positionsinformationen bzw. Positionsprofile über einen Zeitraum zu sammeln. Durch eine sukzessive oder sequentielle Folge einer Mehr- oder Vielzahl solcher Positionsprofile, beispielsweise während die zumindest teilweise spiegelnde Oberfläche 12 eine Relativbewegung 28 bezüglich den messtechnischen Komponenten, der Beleuchtungseinrichtung 14, der Detektionsfläche 16 und/oder der Erfassungseinheit 18, erfährt, kann die Auswerteeinrichtung 26 die sukzessiven oder sequentiellen Positionsprofile zu einem zwei- oder dreidimensionalen virtuellen Abbild oder Rekonstruktion zusammenführen, so dass ein Vergleich zwischen dem virtuellen Abbild oder der Rekonstruktion und einer fehlerfreien Soll-Struktur möglich ist.

Die Relativbewegung 28 kann beispielsweise durch eine Positioniereinheit 32, wie etwa eine Rotationseinheit zum Versetzen der Leichtmetallfelge in eine Rotation, erzielt werden, so dass sich die Leichtmetallfelge und mithin die zumindest teilweise spiegelnde Oberfläche 12 vor der Beleuchtungseinrichtung 14 dreht und verschiedene Abschnitte der zumindest teilweise spiegelnden Oberfläche 12 das Muster spiegeln. Eine Rotationsbewegung kann insbesondere bei radial symmetrische Oberflächen vorteilhaft sein, um eine zügige Auswertung zu ermöglichen. Durch die Relativbewegung 28 zwischen der zu inspizierenden zumindest teilweise spiegelnden Oberfläche 12 und den messtechnischen Komponenten, Beleuchtungseinrichtung 14, Detektionsfläche 16 und/oder Erfassungseinheit 18 kann beispielsweise in der Auswerteeinrichtung 26 die Information eines Oberflächengebietes, d.h. eines Teils oder der gesamten zumindest teilweise reflektierenden Oberfläche 12 gesammelt und zusammengesetzt und bezüglich Oberflächenfehler 34 ausgewertet bzw. vermessen werden.

Aufgrund der Abhängigkeit der Position P₁ von dem Einstrahlwinkel der Beleuchtungseinrichtung 14 auf die zumindest teilweise spiegelnde Oberfläche 12 kann die Relativbewegung 28 auch als eine Verschiebung der Beleuchtungseinrichtung 14 bezüglich der zumindest teilweise spiegelnden Oberfläche 12 (oder umgekehrt) beschrieben werden. Eine Begrenzung oder Vermeidung einer Relativbewegung zwischen der Beleuchtungseinrichtung 14 und/oder der Detektionsfläche 16 kann eine Projektion des Musters außerhalb der Detektionsfläche oder eine Verschiebung der Detektionsebene 14 außerhalb eines Erfassungsbereichs der Erfassungseinrichtung 18 vermeiden.

Bei dem Oberflächenfehler 34 kann es sich beispielsweise um einen Lackfehler, einen Gießfehler, eine mechanische Beschädigungen wie eine Beule, Einschlüsse im Material, Lackbeulen oder Lacktropfen, variierende Lackschichtdicken, einen Höhen- oder Seitenschlag, Kratzer oder Riefen handeln. Generell können auch andere Oberflächenfehler, die eine variierende Oberflächennormale n auf der zumindest teilweise spiegelnden Oberfläche aufweisen, detektiert werden.

Der Oberflächenfehlers 34 weist eine von n₁ verschiedene Oberflächennormale n₂ auf. Eine Anwesenheit des Oberflächenfehlers 34 in dem das Muster spiegelnden Bereich der zumindest teilweise spiegelnden Oberfläche 12 kann aufgrund der unterschiedlichen Oberflächennormalen n₁ und n₂ zu einer Veränderung der Position, an welchen das Muster projiziert wird führen. Diese Änderung des Ortes kann von der Erfassungseinheit 18 erfasst werden.

Für eine hohe laterale Detailauflösung der Messung kann es vorteilhaft sein, einen möglichst hochfokussierten Laser-Linienprojektor als Beleuchtungseinrichtung 14 einzusetzen. Bei einer relevanten oder starken Variation eines Höhenverlaufs der zumindest teilweise spiegelnden Oberfläche 12 kann es zudem vorteilhaft sein, einen Laser-Linien-Projektor mit einer besonders großen Rayleigh-Länge einzusetzen, d.h. einem besonders großen Schärfentiefebereich des Lasers. Ausführungsbeispiele zeigen Laser-Linien-Projektoren mit einer Rayleigh-Länge, die größer ist als eine Strecke zwischen der Beleuchtungseinrichtung 14, der zumindest teilweise spiegelnden Oberfläche 12 und der Detektionsfläche 16. Alternative Ausführungsbeispiele zeigen Laser-Linien-Projektoren, die ein 0,5-faches, Zweifaches, Fünffaches oder Zehnfaches dieser Entfernung als Rayleigh-Länge aufweisen.

Ausführungsbeispiele zeigen Beleuchtungseinrichtungen, die eine automatische Fokussierung der jeweiligen Beleuchtung, wie etwa eines Lasers, einsetzen, um einen möglichst großen Objektbereich mit einer möglichst guten, d.h. exakten Fokussierung, wie etwa eine Laserfokussierung zu erfassen. Die automatische Fokussierung kann basierend auf einem Abstand zwischen der zumindest teilweise spiegelnden Oberfläche 12, der Beleuchtungseinrichtung 14, der Detektionsfläche 16 und der Erfassungseinheit 18 gesteuert sein, bspw. durch eine motorische Steuerung, die einen Autofokus umsetzt. Eine Fokussiereinrichtung, insbesondere eine Laser-Fokussiereinrichtung kann für eine Erhöhung des Tiefenschärfebereichs des Musters auf der Oberfläche eingesetzt werden.

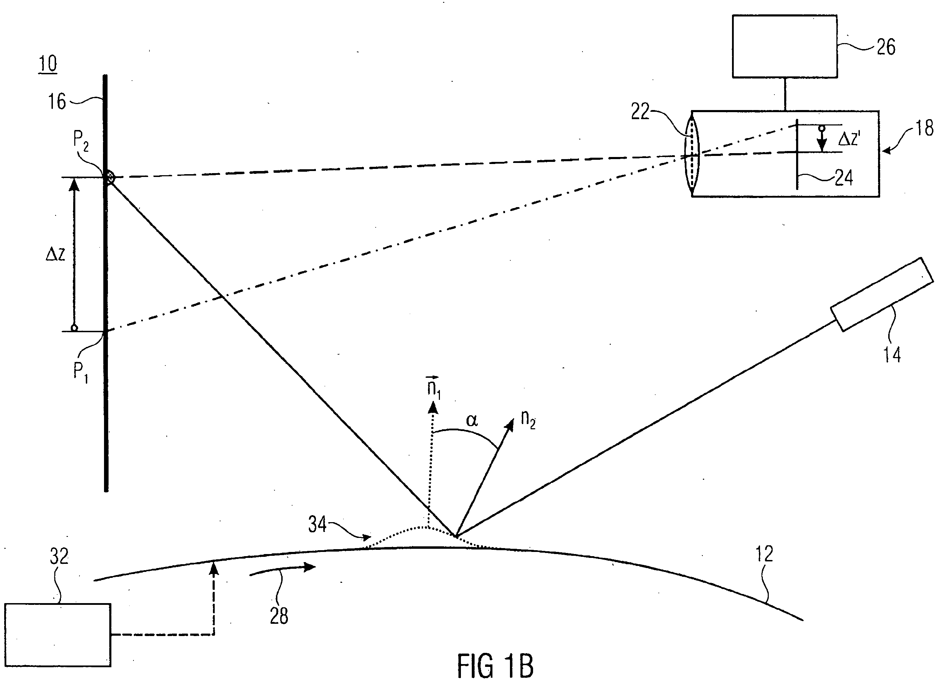

Fig. 1b zeigt Vorrichtung 10, bei der der Oberflächenfehler 34 an der zumindest teilweise spiegelnden Oberfläche 12 detektiert wird. Das Muster der Beleuchtungseinrichtung 14 wird durch Spiegelung an der zumindest teilweise spiegelnden Oberfläche 12 und des Oberflächenfehlers 34 an die Detektionsfläche 16 projiziert. Der Oberflächenfehler 34 weist die Oberflächennormale n₂ auf, so dass die Oberflächennormalen n₁ und n₂ einen Winkel α zueinander aufweisen. Aufgrund der mit dem Winkel α gegenüber der Oberflächennormale n₁ geneigten Oberflächennormalen n₂ wird das Muster der Beleuchtungseinrichtung 14 in einem anderen Winkel an dem Oberflächenfehler 34 gespiegelt, als an der zumindest teilweise spiegelnden Oberfläche 12 in Fig. 1 a. Die Spiegelung des Musters mit einem veränderten Winkel führt zu einer Projektion des Musters an der Detektionsfläche 16 an einem Ort P₂, der gegenüber dem Ort P₁ einen Abstand von Δz aufweist. Der Abstand Δz ist unter anderem abhängig von dem Winkel α, so dass ein Ausmaß der Verschiebung bzw. des Abstandes Δz zwischen den Orten P₁ und P₂ Rückschlüsse auf eine Art und ein Ausmaß des Oberflächenfehlers 34 ermöglichen kann. Die Verschiebung Δz kann als verändertes Muster an der Detektionsfläche 16 von der Erfassungseinheit 18 erfasst werden. Abhängig von einer optischen Justage der Erfassungseinheit 18, beispielsweise ein Abstand des Bildsensors 24 zu der Detektionsfläche 16 und/oder einem Brechungsindex der Abbildungsoptik 22, wird der Abstand Δz auf dem Bildsensor 24 als ein Abstand Δz' abgebildet. Ein Vergleich einzelner Bilder der Muster kann in der Auswerteeinrichtung 26 durchgeführt und der Oberflächenfehler 34 festgestellt werden. Werden der Auswerteeinrichtung 26 Informationen, wie etwa Vorschub, der Positioniereinrichtung 28 und/oder des Objekts mit der zumindest teilweise spiegelnden Oberfläche 12 bereitgestellt, kann an der Auswerteeinrichtung 26 möglicherweise ein Abbild des Objekts und Angaben über Art, Ort und Ausdehnung von Oberflächenfehlern erstellt werden. Alternativ oder zusätzlich kann das Muster durch den Oberflächenfehler 34 verformt werden, wenn bspw. das Muster auf der zumindest teilweise spiegelnden Oberfläche 12 eine größere Ausdehnung in einer oder mehreren Richtungen aufweist, als der Oberflächenfehler 34. In solch einem Fall können bspw. Teile des Musters, welche an dem Oberflächenfehler 34 gespiegelt werden gegenüber Teilen des Musters, welche an der zumindest teilweise spiegelnden Oberfläche 12 gespiegelt werden, an der Detektionsfläche 16 verschoben sein, so dass an der Detektionsfläche 16 ein verformtes oder verzerrtes Muster detektierbar ist.

Ein Verhältnis zwischen dem Winkel α und dem Abstand Δz kann abhängig von einem Winkel, mit welchem die Beleuchtungseinrichtung 14 bezüglich der Oberflächennormalen n₁ und/oder einem Abstand zwischen einem Ort der Spiegelung an der zumindest teilweise spiegelnden Oberfläche 12 und der Detektionsfläche 16 einstellbar sein. Ist das Muster beispielsweise ein Laser-Muster, insbesondere bei einem Laser mit einer hohen Rayleigh-Länge, erlaubt Vorrichtung 10 eine Abbildung des Oberflächenfehlers 34 auf die Detektionsfläche 16 mit der Vergrößerungsfunktion. Das bedeutet, dass eine Bestrahlungsrichtung der Beleuchtungseinrichtung 14 in eine Richtung hin zu der zumindest teilweise spiegelnden Oberfläche 12 und eine Hauptblickrichtung der Erfassungseinheit 18 in eine Richtung hin zu der Detektionsfläche 16 einen Ausrichtungswinkel zu einander aufweisen. Der Ausrichtungswinkel kann einen Wert in einem Winkelbereich von größer als 5° und kleiner als 175°, von größer als 10° und kleiner als 170° oder von größer als 20° und kleiner als 160° aufweisen. Die Bestrahlung der zumindest teilweise spiegelnden Oberfläche 12 kann somit in einer schrägen Ausrichtung der Beleuchtungseinrichtung 14 bezüglich der zumindest teilweise spiegelnden Oberfläche 12, der Detektionsfläche 16 und/oder der Erfassungseinheit 18 erfolgen.

In anderen Worten kann Vorrichtung 10 eine hohe Empfindlichkeit auf lokale Neigungsunterschiede der zumindest teilweise spiegelnden Oberfläche 12 aufweisen, indem die direkte Reflexion des eingestrahlten Musters, beispielsweise ein Fächerstrahl, zu einer Verstärkung einer Neigungsänderung auf der zumindest teilweise spiegelnden Oberfläche 12 führt. Die Verstärkung der Neigungsänderung kann bspw. von einem Abstand zwischen der Detektionsfläche 16 und der abgetasteten zumindest teilweise spiegelnden Oberfläche beeinflusst oder zumindest teilweise bestimmt sein. Eine Auflösung der Erfassungseinheit 18, beispielsweise die Kamera-Auflösung, kann entsprechend geringer sein, um einen eventuellen Oberflächenfehler 34 mit einer möglicherweise sehr geringen Ausdehnung entlang einer Richtung der Relationsbewegung 28 noch abbilden zu können.

Alternativ oder zusätzlich kann durch die Verstärkung der Neigungsänderung bzw. des Winkels α, eine detaillierte Analyse der zumindest teilweise spiegelnden Oberfläche 12 ermöglicht werden, indem bislang aufgrund begrenzter Kameraauflösungen nicht oder kaum erfassbare Oberflächenfehler 34, beispielsweise aufgrund zu geringer Neigungsänderungen am Oberflächenfehler 34, durch die Vergrößerung für die Kameraauflösung detektierbar, d.h. sichtbar, werden.

In anderen Worten kann die Auswertung der Lichtverteilung auf der Detektionsebene bezüglich kurzfrequenter Helligkeitsverläufe zur Auswertung besonders gering ausgedehnter lateraler Defekt-Strukturen mit einer Ausdehnung kleiner als die Lichtlinienbreite auf dem Objekt erfolgen, indem die Vergrößerungsfunktion ausgenutzt wird.

Das auftreffende, durch die zu erfassende und zumindest teilweise spiegelnde Oberfläche 12 reflektierte und durch einen etwaigen Oberflächenfehler 34 oder andere Formfehler verformte oder verschobene Muster, etwa eine Lichtlinie eines Lichtfächer-Strahls, welches sich auf der Detektionsfläche 16 als mehr oder weniger verformtes Musterausprägt, kann durch die Erfassungseinheit 18 erfasst und über die Auswerteeinrichtung 26, beispielsweise ein Messrechner, bestimmt werden.

Die erfasste zumindest teilweise spiegelnde Oberfläche 12 kann bezüglich lokaler Steigungsänderungen von Oberflächenfehlern analysiert werden. Bei einer entsprechend kalibrierten Messanordnung kann es ebenso möglich sein, eine gemessene Oberflächensteigung zu integrieren, um einen globalen Höhenverlauf der zumindest teilweise spiegelnden Oberfläche 12 teilweise oder insgesamt zu rekonstruieren. Damit kann eine teilweise oder absolute 3D-Form-Vermessung der zumindest teilweise spiegelnden Oberfläche 12 ermöglicht werden. Beispielsweise kann ein Höhen- und/oder Seitenschlag einer glänzenden Kfz-Felge vermessen werden.

Um eine 3-dimensionale Vermessung der zumindest teilweise spiegelnden Oberfläche durchzuführen, kann beispielsweise ein Leichtmetallrad in eine Rotationsbewegung versetzt werden, während die Beleuchtungseinrichtung bzw. Lichtquelle, die Erfassungseinheit 18 (Kamera) und die Detektionsfläche in Ruhe bleiben. Die Rotationsbewegung kann durch eine quasi natürliche Drehung des Rades um seine geometrische Mittelachse bewirkt werden. Alternativ kann auch das Objekt (Leichtmetallrad) in Ruhe verbleiben und die messtechnischen Komponenten relativ dazu bewegt werden.

Für Ausführungsbeispiele kann es vorteilhaft sein, weitere Informationen aus dem Kamera-Bild zu generieren. Beispielsweise kann sich ein lateral sehr gering ausgeprägter Defekt durch eine leichte Verformung einer Lichtintensitätsverteilung auf der Detektionsfläche auszeichnen, wie etwa in Form einer charakteristischen Eindellung der Lichtverteilung entlang eines Längenprofils durch das Linienmuster oder durch eine asymmetrische Verformung der Lichtverteilung.

Alternativ ist es ebenfalls denkbar, dass eine Personen-gestützte Auswertung des auf die Detektionsfläche projizierten Musters erfolgt. So ist beispielsweise vorstellbar, dass ein über die zumindest teilweise spiegelnde Oberfläche auf die Detektionsfläche projizierter Fächerstrahl, welcher auf der Detektionsfläche als Linie projiziert wird, bei Einstellung einer genügend großen Vergrößerung, wie sie in den Fig. 1 a und 1 b beschrieben ist, einen für das menschliche Auge ggf. deutlich erkennbaren Ausschlag, beispielsweise eine Verformung oder eine Krümmung im Falle eines Oberflächenfehlers erfährt und diese Verformung durch den Prüfer festgestellt werden kann. Möglichweise können so ebene Flächen, bzw. zumindest teilweise spiegelnde Oberflächen auf Oberflächenfehler wie etwa Dellen, kontrolliert werden, so dass eine Verschiebung des Musters einen Rückschluss auf den Oberflächenfehler ermöglicht.

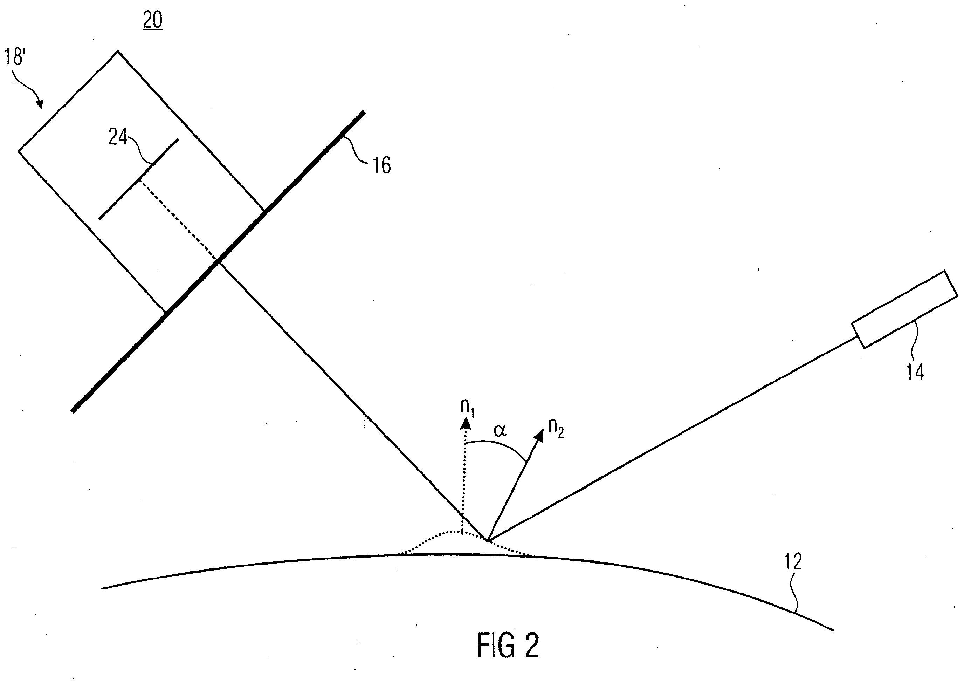

Fig. 2 zeigt eine Vorrichtung 20 zur Erfassung von zumindest teilweise spiegelnden Oberflächen 12, bei der die Detektionsebene 16 mit einer Erfassungseinheit 18', beispielsweise eine Flächenkamera gekoppelt ist, so dass auf eine Verwendung einer zusätzlichen Abbildungs-Optik verzichtet werden kann. Die Detektionsebene 16 kann beispielsweise durch einen Glasfaser-Taper optisch an die Erfassungseinheit 18' gekoppelt sein. Die Detektionsfläche 16 kann zumindest teilweise transparent ausgebildet sein, so dass das an die Detektionsfläche 16 projizierte Muster von einer der zumindest teilweise spiegelnden Oberfläche 12 abgewandten Seite der Detektionsfläche 16 erfassbar ist. Die optische Kopplung zwischen der Detektionsfläche 16 und der Erfassungseinheit 18' ermöglicht die Erfassung des Musters durch die Detektionsfläche 16 hindurch, d.h., dass eine Erfassung des Musters auch von einer der zumindest teilweise spiegelnden Oberfläche 12 abgewandten Seite der Detektionsfläche 16 möglich ist.

Eine derart ganz oder teilweise unveränderliche Anordnung zwischen Erfassungseinheit 18 und Detektionsfläche 16 ermöglicht eine feste Kopplung der Detektionsebene 16 an die Erfassungseinheit 18', d.h. mit einem in etwa konstanten Abstand, so dass auf eine Abbildungsoptik und/oder eine veränderliche Fokussierung, wie sie in den Fig. 1a und 1b gezeigt ist, verzichtet werden. Dies kann zu einem reduzierten mechanischen Aufwand führen und möglicherweise kostengünstiger sein.

Alternative Ausführungsbeispiele zeigen Messanordnungen, bei denen die Detektionsfläche 16 mit der Erfassungseinheit 18 über einen Glasfaser-Taper gekoppelt ist, so dass auf eine Abbildungsoptik, wie sie bspw. in Fig. 1a und 1b dargestellt ist, verzichtet werden kann. Eine Eingangsfläche des Glasfaser-Tapers kann mit der Detektionsfläche 16 gekoppelt sein.

Alternative Ausführungsbeispiele zeigen Messanordnungen, bei denen die Detektionsfläche 16 eine aktive Fläche des Kamerachips 24 bzw. einer Kameraschaltung oder eines TFT-Flat-Panel Detektors ist. Die Verwendung eines TFT-Flat-Panel-Detektors ermöglicht eine Verwendung von verhältnismäßig großen Detektionsflächen 16.

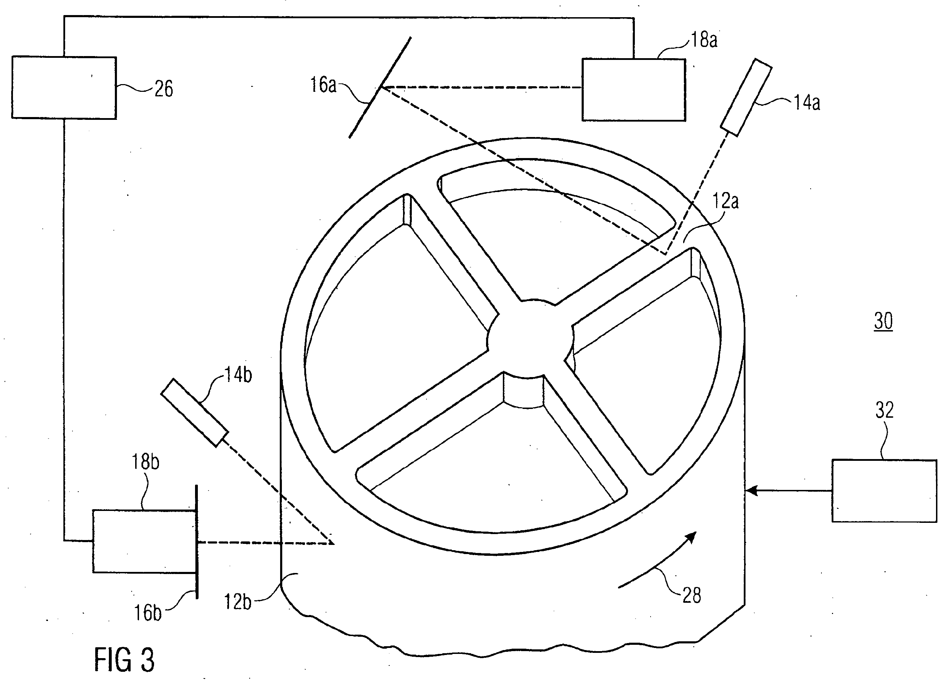

Fig. 3 zeigt eine schematische Darstellung eines Vermessungssystems 30. Das Vermessungssystem 30 ist ausgebildet, um eine Leichtmetallfelge mit einer zumindest teilweise spiegelnden Oberfläche 12a und einer zumindest teilweise spiegelnden Oberfläche 12b zu erfassen. Eine Beleuchtungseinrichtung 14a, eine Detektionsfläche 16a und eine Erfassungseinheit 18a sind angeordnet, die zumindest teilweise spiegelnde Oberfläche 12a zu erfassen, wie es in Fig. 1 a und 1b gezeigt ist. Eine Beleuchtungseinrichtung 14b, eine Detektionsfläche 16b und eine Erfassungseinheit 18b sind angeordnet, um die zumindest teilweise spiegelnde Oberfläche 12b zu erfassen, wie es in Fig. 2 gezeigt ist. Die Erfassungseinheiten 18a und 18b sind mit der Auswerteeinrichtung 26 verbunden, die ausgebildet ist, um basierend auf den Informationen der Erfassungseinheiten 18a und 18b ein zumindest teilweises dreidimensionales Abbild oder Modell der Leichtmetallfelge zur Überprüfung auf Oberflächenfehler zu erstellen. Das Vermessungssystem 30 umfasst zwei Vorrichtungen zur Erfassung jeweils einer zumindest teilweise spiegelnden Oberfläche 12a bzw. 12b.

Durch eine Kombination mehrerer messtechnischer Anordnungen, d.h. Messanordnungen an einem Objekt können verschiedene Oberflächenbereiche 12a und/oder 12b gezielt erfasst werden. Beispielsweise kann eine Messanordnung 14a, 16a und 18a für die Erfassung der Außenseite, d.h. einer Deckfläche 12a des genäherten Zylinders des Leichtmetallrades verwendet werden. Die zweite Messanordnung 14b, 16b und 18b kann für die Erfassung einer Lauffläche 12b genutzt werden, d.h. für eine quasi zylinder- oder kegelförmige Felgenaußenseite. Eine dritte Messanordnung kann optional genutzt werden, um Flanken der radial verlaufenden Speichen zu erfassen. Weitere Messanordnungen können für weitere zu erfassende Oberflächenbereiche, beispielsweise eine Innenseite der Leichtmetallfelge genutzt werden. Daten der Messanordnungen (14a, 16, 18a) und (14b, 16b, 18b) sowie weiterer Messanordnungen können von einem oder mehreren Auswerteeinheiten 26 ausgewertet werden.

Ferner können für bestimmte Prüfaufgaben, wie etwa die Überprüfung eines Oberflächenverlaufs einer streuenden oder diffus reflektierenden Fläche der Felge, Messanordnungen für andere Prüfverfahren, wie etwa ein Laser-Lichtschnitt-Messverfahren, angeordnet werden und in einer weiteren Auswerteeinheit oder einer gemeinsamen Auswerteeinheit ausgewertet werden. Die ein oder mehreren Auswerteeinheiten 26 können Schnittstellen aufweisen, so dass Messdaten verschiedener Messanordnungen und/oder Messverfahren kombiniert ausgewertet werden können.

Durch eine hohe verfügbare, d.h. durchführ- und/oder auswertbare Messfrequenz von entsprechenden Messkameras kann das gesamte Objekt in einer verhältnismäßig kurzen Zeit, beispielsweise in einer oder wenigen Sekunden, mit einer hohen lateralen Abtastung, wie etwa im Zehntelmillimeterbereich, erfasst werden, wodurch relativ kleine Unebenheiten oder andere Oberflächenfehler detektierbar bzw. geringe oder sehr geringe Formabweichungen messbar sein können. Der jeweils erfassbare Teil der zu erfassenden Oberfläche 12a und/oder 12b kann von der geometrischen Wahl der Einstrahlrichtung einer oder mehrerer Messeinrichtungen abhängig sein.

In anderen Worten kann durch das beschriebene Ausführungsbeispiel ein bestimmter Teil der jeweiligen Oberfläche 12a oder 12b erfasst werden, die von dem jeweiligen Muster angestrahlt und von der die jeweils spekular reflektierte Intensität auf die jeweilige Detektionsebene 16a oder 16b projiziert wird.

Das Leichtmetallrad kann von den vorhandenen Messanordnungen (14a, 16a, 18a) und (14b, 16b, 18b) von verschiedenen Richtungen aus teilweise, weitestgehend oder vollständig erfasst werden, wobei die Geometrie der Messanordnungen (14a, 16a, 18a) und (14b, 16b, 18b) während der Relativbewegung 28 konstant bleiben kann. Die Relativbewegung 28 kann beispielsweise eine Drehung, welche das Leichtmetallrad bezüglich aller Messanordnungen bewegt, sein. Alternativ kann das Leichtmetallrad in Ruhe verbleiben und die Messanordnungen (14a, 16a, 18a) und (14b, 16b, 18b) einzeln oder gemeinsam mit der Relativgeschwindigkeit 28 bezüglich des Leichtmetallrades bewegt werden.

Um beispielsweise für verschiedene Typen von Leichtmetallrädern optimale Aufnahmen, d.h. eine hohe Fehlererkennungsrate zu erzielen, können beispielsweise alle oder nur bestimmte messtechnische Komponenten der einzelnen Messanordnungen (14a, 16a, 18a) und/oder (14b, 16b, 18b) durch zusätzliche motorische Bewegungseinheiten entsprechend einer verschiedenen Rädergeometrie speziell positioniert werden. Dies kann entweder durch translatorische und/oder durch rotatorische Positioniereinheiten geschehen. So kann beispielsweise eine Form von Speichen, wie etwa kantig, rund, oval oder mit einem variablen Durchmesser, derart berücksichtigt werden, dass die Messeinrichtung (14a, 16a, 18a) derart bewegt wird, dass eine verschiedene Speichengeometrie erfasst werden können. Alternativ oder zusätzlich können verschiedene Typen von verschiedene Leichtmetallräder mit verschiedenen Breiten erfasst werden, indem die Messeinrichtung 14b, 16b, 18b derart bewegt wird, dass eine vergrößerte zumindest teilweise spiegelnde Oberfläche 12b weiterhin vollständig erfasst wird. Alternativ oder zusätzlich kann sowohl eine jeweilige Messanordnung (14a, 16a, 18a) und/oder (14b, 16b, 18b) als auch ein Vermessungssystem 30 mehrere Beleuchtungseinrichtungen 14a und 14b umfassen, um zumindest teilweise eine gleiche zumindest teilweise spiegelnde Oberfläche 12a oder 12b zu erfassen, da möglicherweise verschiedene Arten von Oberflächenfehlern aus verschiedenen Beleuchtungswinkeln eine höhere Erkennungsrate der jeweiligen Art von Oberflächenfehler ermöglichen. So kann beispielsweise eine erste Beleuchtungseinrichtung mit einem Winkel von 15° und eine zweite Beleuchtungseinrichtung mit einem Winkel von 30° zur zumindest teilweise spiegelnden Oberfläche 12b angeordnet sein. Verschiedene Beleuchtungseinrichtungen 14a bzw. 14b, die in unterschiedlichen Winkeln bezüglich einer zumindest teilweise spiegelnden Oberfläche 12a oder 12b angeordnet sind, können selektiv eingeschaltet werden, um bspw. eine Überprüfung bezüglich einer Art von Oberflächenfehlern durchzuführen. So kann in einer ersten Umdrehung einer Radfelge bspw. eine erste Beleuchtungseinrichtung 14a oder 14b ein erstes Muster projizieren und in einer zweiten Umdrehung eine zweite Beleuchtungseinrichtung 14b oder 14a ein gleiches oder verschiedenes Muster projizieren.

Alternativ oder zusätzlich ist vorstellbar, dass zwei oder mehrere Beleuchtungseinrichtungen 14a und/oder 14b in unterschiedlichen Winkeln bezüglich einer zumindest teilweise spiegelnden Oberfläche 12a oder 12b angeordnet sind und je ein Muster auf verschiedene Detektionsflächen 16a und 16b oder auf verschiedene Bereiche einer gemeinsamen Detektionsfläche 16a oder 16b projizieren.

Alternativ oder zusätzlich kann das Vermessungssystem 30 lediglich ein oder mehrere Vorrichtungen gemäß der vorangegangenen Ausführungsbeispiele umfassen, die jeweils unabhängig von einander gegenüber einem Prüfobjekt bewegt oder in Ruhe verbleiben können oder bei denen eine Relativbewegung durch eine Bewegung des Prüfobjektes oder der Messanordnung einstellbar ist.

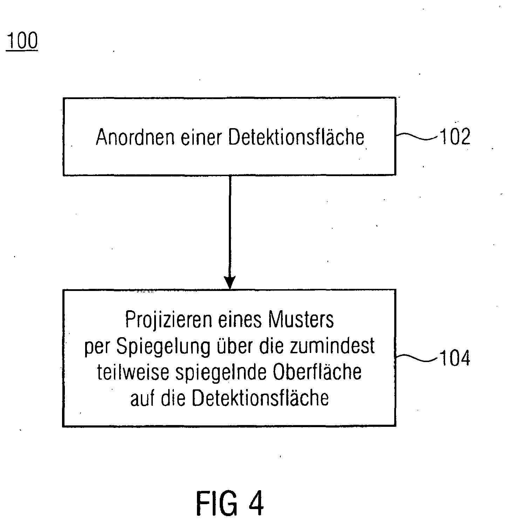

Fig. 4 zeigt ein Blockdiagramm eines Verfahrens 100 zur Erfassung von zumindest teilweise spiegelnden Oberflächen. In einem ersten Schritt 102 wird eine Detektionsfläche angeordnet. In einem zweiten Schritt 104 wird ein Musters per Spiegelung über die zumindest teilweise spiegelnde Oberfläche auf die Detektionsfläche projiziert.

Durch die Nutzung einer Detektionsebene kann eine teilweise, vorwiegend oder vollständig spekular, d.h. spiegelnd, reflektierende Oberfläche erfasst werden. Sinngemäß könnte das hier beschriebene Verfahren 100 "inverse Deflektometrie" genannt werden: "invers", da das Licht des Musters einen zur Deflektometrie umgekehrten Weg nimmt. Das Licht kann von einer bspw. punktförmigen Lichtquelle über die zu erfassende, zumindest teilweise spiegelnde Oberfläche auf einen zweidimensionalen Detektionsschirm reflektiert werden; "Deflektometrie", weil das Muster erst über eine Reflexion an der zumindest teilweise spiegelnden Oberfläche abgelenkt und anschließend auf der Detektionsfläche projiziert, d.h. aufgefangen wird, wodurch für das Verfahren 100 eine große, d.h. starke mögliche Empfindlichkeit bezüglich lokaler Oberflächenneigungen an der zumindest teilweise spiegelnden Oberfläche justierbar sein kann. Wird für das Verfahren 100 eine fächerhaft geformte Lichtstrahlungsverteilung verwendet, kann das Verfahren sinngemäß auch als "inverse Lichtschnitt-Deflektometrie" bezeichnet werden: "Lichtschnitt", weil zur Auswertung der Lichtverteilung des Musters (bspw. des Lichtfächers) auf der Detektionsfläche eine Lichtschnitt-Kamera eingesetzt werden kann.

Reflektierende oder teilreflektierende Oberflächen können während einer Bewegung automatisch erfasst und/oder vermessen bzw. bezüglich eventueller Oberflächenfehler überprüft werden. Unter Verwendung eines optischen Messaufbaus mit einer Erfassungseinrichtung, wie etwa einer Flächenkamera, einer geeigneten Beleuchtungseinrichtung, der zu erfassenden zumindest teilweise spiegelnden Oberfläche und einer beispielsweise Rechner-gestützten Auswerte-Einheit kann die Überprüfung der zumindest teilweise spiegelnden Oberfläche auf Oberflächenfehler automatisch erfolgen. Die Flächenkamera kann bspw. ausgebildet sein, um ein Helligkeitsbild einer Detektionsebene zu erzeugen.

Bei einer geeigneten Wahl der Messanordnung zwischen Lichtquelle, Oberfläche, Detektionsebene und/oder Erfassungseinheit können bereits sehr kleine lokale Neigungsunterschiede der Oberflächen-Normalen detektierbar sein, die sich beispielsweise mit Triangulations-Messverfahren nicht oder unzureichend erfassen lassen. Deflektometrische Verfahren können diese Oberflächenfehler mitunter lediglich unter Verwendung einer hohen Prüfdauer erfassen.

Das Verfahren 100 kann mit einer Lichtschnitt-Deflektometrie kombiniert werden. In vielen Fällen liegt an einem Prüfobjekt eine Kombination von Oberflächen mit spekularer und/oder diffuser Reflexion vor, wobei der Anteil der beiden Reflexionsanteile vom Beleuchtungswinkel abhängig sein kann. Beispielsweise kann der Anteil der spiegelnden Reflexion größer sein, je flacher das Licht des Musters einfällt. Auf klar-lackierten Oberflächen von Leichtmetallfelgen ist dies besonders stark gegeben, wobei sich in der diffus und spiegelnd reflektierten Intensität möglicherweise verschiedene Fehlerarten zeigen können. Bei einer Kombination von Messverfahren kann eine kombinierte Nutzung von Lichtquellen bzw. Beleuchtungseinrichtungen möglich sein.

Im Vergleich zu Deflektometrie-Messverfahren kann Verfahren 100 unter Verwendung von speziellen Messkameras eine durch die Messkameras hohe erreichbare Mess- und Auswertefrequenz auf der Auswerteeinheit direkt auf oder nach dem Bildsensor (Kamera-Chip) und mithin eine wesentlich schnellere Erfassung der Oberfläche ermöglichen. Das bedeutet, dass beispielsweise kein vollständiges Abbild im Sinne eines Fotos der Detektionsebene erfasst und zur Auswerteeinheit übertragen wird, sondern möglicherweise ein gegenüber dem vollständigen Abbild komprimiertes Helligkeitsbild. Alternativ oder zusätzlich können bspw. auch so genannte Huckepack Chips oder Field Programmable Gate Arrays (FPGA) genutzt werden, um eine Datenreduktion zu ermöglichen. So kann bspw. ein FPGA direkt mit dem Bildsensor gekoppelt sein, um das durch den Bildsensor erfasste Bild zu verarbeiten und/oder zu komprimieren. Eine geringere Datenübertragungsrate von der Erfassungseinheit zur Auswerteeinrichtung ermöglicht die Übertragung mehrerer Bilder pro Zeiteinheit sowie eine schnellere Berechnung der Ergebnisse.

Die beschriebenen Vorrichtungen und Verfahren ermöglichen eine berührungslose Erfassung von zumindest teilweise spiegelnden oder auch hochglänzenden Oberflächen. Eine mögliche Anwendung ist die Qualitätsüberprüfung bezüglich lokaler Oberflächenfehler, wie etwa Dellen, Beulen, Kratzer, Riefen und/oder zur Vermessung der Oberfläche oder des gesamten Körpers. Bei Kfz-Leichtmetallfelgen kann es zu Lackfehlern oder Kratzern kommen, die sich als kurzreichweitige Strukturen mit geringer bis sehr geringer Höhenausdehnung ausprägen. Alternativ oder zusätzlich kann beispielsweise eine Formvermessung von hochglänzenden Oberflächen, beispielsweise eine Vermessung des Rundlaufs von spiegelnden Kfz-Felgen durchgeführt werden.

Obwohl manche Aspekte im Zusammenhang mit einer Vorrichtung beschrieben wurden, versteht es sich, dass diese Aspekte auch eine Beschreibung des entsprechenden Verfahrens darstellen, sodass ein Block oder ein Bauelement einer Vorrichtung auch als ein entsprechender Verfahrensschritt oder als ein Merkmal eines Verfahrensschrittes zu verstehen ist. Analog dazu stellen Aspekte, die im Zusammenhang mit einem oder als ein Verfahrensschritt beschrieben wurden, auch eine Beschreibung eines entsprechenden Blocks oder Details oder Merkmals einer entsprechenden Vorrichtung dar.

Je nach bestimmten Implementierungsanforderungen können Ausführungsbeispiele der Erfindung in Hardware oder in Software implementiert sein. Die Implementierung kann unter Verwendung eines digitalen Speichermediums, beispielsweise einer Floppy-Disk, einer DVD, einer Blu-ray Disc, einer CD, eines ROM, eines PROM, eines EPROM, eines EEPROM oder eines FLASH-Speichers, einer Festplatte oder eines anderen magnetischen oder optischen Speichers durchgeführt werden, auf dem elektronisch lesbare Steuersignale gespeichert sind, die mit einem programmierbaren Computersystem derart zusammenwirken können oder zusammenwirken, dass das jeweilige Verfahren durchgeführt wird. Deshalb kann das digitale Speichermedium computerlesbar sein. Manche Ausführungsbeispiele gemäß der Erfindung umfassen also einen Datenträger, der elektronisch lesbare Steuersignale aufweist, die in der Lage sind, mit einem programmierbaren Computersystem derart zusammenzuwirken, dass eines der hierin beschriebenen Verfahren durchgeführt wird.

Allgemein können Ausführungsbeispiele der vorliegenden Erfindung als Computerprogrammprodukt mit einem Programmcode implementiert sein, wobei der Programmcode dahin gehend wirksam ist, eines der Verfahren durchzuführen, wenn das Computerprogrammprodukt auf einem Computer abläuft. Der Programmcode kann beispielsweise auch auf einem maschinenlesbaren Träger gespeichert sein.

Andere Ausführungsbeispiele umfassen das Computerprogramm zum Durchführen eines der hierin beschriebenen Verfahren, wobei das Computerprogramm auf einem maschinenlesbaren Träger gespeichert ist.

Mit anderen Worten umfasst ein Ausführungsbeispiel des erfindungsgemäßen Verfahrens somit ein Computerprogramm, das einen Programmcode zum Durchführen eines der hierin beschriebenen Verfahren aufweist, wenn das Computerprogramm auf einem Computer abläuft. Ein weiteres Ausführungsbeispiel der erfindungsgemäßen Verfahren ist somit ein Datenträger (oder ein digitales Speichermedium oder ein computerlesbares Medium), auf dem das Computerprogramm zum Durchführen eines der hierin beschriebenen Verfahren aufgezeichnet ist.

Ein weiteres Ausführungsbeispiel des erfindungsgemäßen Verfahrens umfasst somit einen Datenstrom oder eine Sequenz von Signalen, der bzw. die das Computerprogramm zum Durchführen eines der hierin beschriebenen Verfahren darstellt bzw. darstellen. Der Datenstrom oder die Sequenz von Signalen kann bzw. können beispielsweise dahin gehend konfiguriert sein, über eine Datenkommunikationsverbindung, beispielsweise über das Internet, transferiert zu werden.

Ein weiteres Ausführungsbeispiel umfasst eine Verarbeitungseinrichtung, beispielsweise einen Computer oder ein programmierbares Logikbauelement, die dahin gehend konfiguriert oder angepasst ist, eines der hierin beschriebenen Verfahren durchzuführen.

Ein weiteres Ausführungsbeispiel umfasst einen Computer, auf dem das Computerprogramm zum Durchführen eines der hierin beschriebenen Verfahren installiert ist.

Bei manchen Ausführungsbeispielen kann ein programmierbares Logikbauelement (beispielsweise ein feldprogrammierbares Gaterarray, ein FPGA) dazu verwendet werden, manche oder alle Funktionalitäten der hierin beschriebenen Verfahren durchzuführen. Bei manchen Ausführungsbeispielen kann ein feldprogrammierbares Gatterarray mit einem Mikroprozessor zusammenwirken, um eines der hierin beschriebenen Verfahren durchzuführen. Allgemein werden die Verfahren bei einigen Ausführungsbeispielen seitens einer beliebigen Hardwarevorrichtung durchgeführt. Diese kann eine universell einsetzbare Hardware wie ein Computerprozessor (CPU) sein oder für das Verfahren spezifische Hardware, wie beispielsweise ein ASIC.

Die oben beschriebenen Ausführungsbeispiele stellen lediglich eine Veranschaulichung der Prinzipien der vorliegenden Erfindung dar. Es versteht sich, dass Modifikationen und Variationen der hierin beschriebenen Anordnungen und Einzelheiten anderen Fachleuten einleuchten werden. Deshalb ist beabsichtigt, dass die Erfindung lediglich durch den Schutzumfang der nachstehenden Patentansprüche und nicht durch die spezifischen Einzelheiten, die anhand der Beschreibung und der Erläuterung der Ausführungsbeispiele hierin präsentiert wurden, beschränkt sei.

## Patentansprüche

1. Vorrichtung (10; 20) zur Erfassung von zumindest teilweise spiegelnden Oberflächen (12; 12a; 12b) mit folgenden Merkmalen:
einer Detektionsfläche (16; 16a; 16b);
einer Beleuchtungseinrichtung (14; 14a; 14b), die ausgebildet ist, um ein Muster per Spiegelung über die zumindest teilweise spiegelnde Oberfläche (12; 12a; 12b) auf die Detektionsfläche (16; 16a; 16b) zu projizieren; und
einer Erfassungseinheit (18; 18'), die ausgebildet ist, um das auf die Detektionsfläche (16; 16a; 16b) projizierte Muster zu erfassen und um ein von der Detektionsfläche (16; 16a; 16b) erfasstes Bild spaltenweise bezüglich eines globalen Intensitätsmaximums auszuwerten;
wobei die Beleuchtungseinrichtung (14; 14a; 14b) einen Linienprojektor umfasst, der ausgebildet ist, um ein Linienmuster auszusenden, wobei das Linienmuster ein Licht-Fächerstrahl ist.

2. Vorrichtung gemäß Anspruch 1, wobei die Erfassungseinheit (18; 18') ausgebildet ist, um das auf die Detektionsfläche (16; 16a; 16b) projizierte Muster während einer kontinuierlichen Relativbewegung zwischen der Beleuchtungseinrichtung (14; 14a; 14b) und der Detektionsfläche (16; 16a; 16b) und der zumindest teilweise spiegelnden Oberfläche (12; 12a; 12b) andererseits zu erfassen.

3. Vorrichtung gemäß Anspruch 1 oder 2, bei der die Detektionsfläche (16; 16a; 16b) ausgebildet ist, um ein reales Bild des Musters zu erzeugen.

4. Vorrichtung (10; 20) gemäß Anspruch 3, bei der die Erfassungseinheit (18; 18') ausgebildet ist, um das auf die Detektionsfläche (16; 16a; 16b) projizierte und durch die Detektionsfläche (16; 16a; 16b) gestreute Muster auf einen Bildsensor (24) abzubilden und durch den Bildsensor (24) zu erfassen.

5. Vorrichtung gemäß einem der Ansprüche 2-4, die ferner eine Auswerteeinheit (26) umfasst, die ausgebildet ist, um eine Fehlerdetektion basierend auf dem von der Erfassungseinheit (18; 18') erfassten Muster auszuführen.

6. Vorrichtung (10; 20) gemäß einem der vorangehenden Ansprüche, bei der die Erfassungseinheit (18; 18') eine Kamera, eine Lichtschnittkamera oder eine Flächenkamera ist.

7. Vorrichtung (10; 20) gemäß einem der Ansprüche 3-6, bei der die Erfassungseinheit ausgebildet ist, um das von der Detektionsfläche (16; 16a; 16b) gestreute Muster in Transmission oder Reflexion zu erfassen.

8. Vorrichtung (10; 20) gemäß einem der vorangehenden Ansprüche, die ferner eine Positioniereinheit (32) umfasst, die ausgebildet ist, um eine Relativbewegung (28) zwischen der Beleuchtungseinrichtung (14; 14a; 14b) und der Detektionsfläche (16; 16a; 16b) und der zumindest teilweise spiegelnden Oberfläche (12; 12a; 12b) andererseits auszuführen.

9. Vorrichtung (10; 20) gemäß einem der vorangehenden Ansprüche, bei der die Beleuchtungseinrichtung (14; 14a; 14b) ausgebildet ist, um Ultraviolettstrahlung oder extrem Ultraviolettstrahlung auszusenden.

10. Vorrichtung (10; 20) gemäß einem der vorangehenden Ansprüche, bei der die Detektionsfläche (16; 16a; 16b) durch einen Glasfaser-Taper optisch an die Erfassungseinheit (18; 18') gekoppelt ist.

11. Vorrichtung (10; 20) gemäß einem der vorangehenden Ansprüche, bei dem die Beleuchtungseinrichtung (14; 14a; 14b) ausgebildet ist, um bei der Projektion des Musters auf die Detektionsfläche (16; 16a; 16b) einen veränderlichen Abstand zwischen der Beleuchtungseinrichtung (14; 14a; 14b) und der zumindest teilweise spiegelnden Oberfläche (12; 12a; 12b) zu berücksichtigen und auf die Detektionsfläche (16; 16a; 16b) zu fokussieren.

12. Vorrichtung (10; 20) gemäß einem der vorangehenden Ansprüche, bei der die Detektionsfläche (16; 16a; 16b) ausgebildet ist, um ein ultraviolettes oder extrem ultraviolettes Messlicht in ein sichtbaren Spektrum zu überführen.

13. Vorrichtung (10; 20) gemäß einem der vorangehenden Ansprüche, bei der die Detektionsfläche (16; 16a; 16b) eine aktive Fläche eines Bildsensors (24) ist und bei der zwischen der zumindest teilweise spiegelnden Oberfläche (12; 12a; 12b) und dem Bildsensor (24) keine abbildende Optik (22) angeordnet ist.

14. Vermessungssystem (30) mit zumindest einer Vorrichtung (10; 20) zur Erfassung von zumindest teilweise spiegelnden Oberflächen (12; 12a; 12b) gemäß einem der Ansprüche 1-13, das ausgebildet ist, um ein Vermessungsobjekt mit einer zu erfassenden Oberfläche (12a; 12b) zu vermessen.

15. Verfahren (100) zu Erfassung von zumindest teilweise spiegelnden Oberflächen (12; 12a; 12b) mit folgenden Schritten:
Anordnen einer Detektionsfläche (16; 16a; 16b);
Projizieren, mit einer Beleuchtungseinrichtung (14; 14a; 14b), eines Musters per Spiegelung über die zumindest teilweise spiegelnde Oberfläche (12) auf die Detektionsfläche (16; 16a; 16b);
Erfassen des auf die Detektionsfläche projizierten Musters;
Auswerten eines von der Detektionsfläche (16; 16a; 16b) erfassten Bildes spaltenweise bezüglich eines globalen Intensitätsmaximums;
wobei das Projizieren so ausgeführt wird, dass ein Linienmuster ausgesendet wird, das ein Licht-Fächerstrahl ist.

16. Computerprogramm mit einem Programmcode zur Durchführung des Verfahrens nach Anspruch 15, wenn das Programm auf einem Computer abläuft.

## Claims

1. A device (10; 20) for sensing at least partially specular surfaces (12; 12a; 12b), comprising:
a detection face (16; 16a; 16b);
an illuminator (14; 14a; 14b) configured to project a pattern onto the detection face (16; 16a; 16b) by reflection via the at least partially specular surface (12; 12a; 12b); and
a sensing unit (18; 18') configured to sense the pattern projected onto the detection face (16; 16a; 16b) and to evaluate an image, which has been sensed from the detection face (16; 16a; 16b), in a column-by-column manner in terms of a global intensity maximum;
the illuminator (14; 14a; 14b) comprising a line projector configured to emit a line pattern, the line pattern being a light fan beam.

2. The device as claimed in claim 1, wherein the sensing unit (18; 18') is configured to sense the pattern, which is projected onto the detection face (16; 16a; 16b), during a continuous relative motion between the illuminator (14; 14a; 14b) and the detection face (16; 16a; 16b) and the at least partially specular surface (12; 12a; 12b), on the other hand.

3. The device as claimed in claim 1 or 2, wherein the detection face (16; 16a; 16b) is configured to generate a real image of the pattern.

4. The device (10; 20) as claimed in claim 3, wherein the sensing unit (18; 18') is configured to map the pattern, which is projected onto the detection face (16; 16a; 16b) and is scattered by the detection face (16; 16a; 16b), onto an image sensor (24) and to sense same by means of the image sensor (24).

5. The device as claimed in any one of claims 2 to 4, further comprising an evaluating unit (26) configured to perform defect detection on the basis of the pattern sensed by the sensing unit (18; 18').

6. The device (10; 20) as claimed in any one of the preceding claims, wherein the sensing unit (18; 18') is a camera, a light-slit camera or an area scan camera.

7. The device as claimed in any one of claims 3 to 6, wherein the sensing unit is configured to sense the pattern, which is scattered by the detection face (16; 16a; 16b), in transmission or reflection.

8. The device (10; 20) as claimed in any one of the preceding claims, further comprising a positioning unit (32) configured to perform a relative motion (28) between the illuminator (14; 14a; 14b) and the detection face (16; 16a; 16b) and the at least partially specular surface (12; 12a; 12b), on the other hand.

9. The device (10; 20) as claimed in any one of the preceding claims, wherein the illuminator (14; 14a; 14b) is configured to emit ultraviolet radiation or extreme ultraviolet radiation.

10. The device (10; 20) as claimed in any one of the preceding claims, wherein the detection face (16; 16a; 16b) is optically coupled to the sensing unit (18; 18') by a glass fiber taper.

11. The device (10; 20) as claimed in any one of the preceding claims, wherein the illuminator (14; 14a; 14b) is configured to take into account, during projection of the pattern onto the detection face (16; 16a; 16b), a variable distance between the illuminator (14; 14a; 14b) and the at least partially specular surface (12; 12a; 12b) and to focus on the detection face (16; 16a; 16b).

12. The device (10; 20) as claimed in any one of the preceding claims, wherein the detection face (16; 16a; 16b) is configured to transfer ultraviolet or extreme ultraviolet measuring light to a visible spectrum.

13. The device (10; 20) as claimed in any one of the preceding claims, wherein the detection face (16; 16a; 16b) is an active face of the image sensor (24) and wherein no imaging optics (22) are arranged between the at least partially specular surface (12; 12a; 12b) and the image sensor (24).

14. A measurement system (30) comprising at least one device (10; 20) for sensing at least partially specular surfaces (12; 12a; 12b) in accordance with any one of claims 1 to 13, the measurement system being configured to measure an object to be measured which comprises a surface to be sensed (12a; 12b).

15. A method (100) of sensing at least partially specular surfaces (12; 12a; 12b), comprising:
arranging a detection face (16; 16a; 16b);
projecting, by means of an illuminator (14; 14a; 14b), a pattern onto the detection face (16; 16a; 16b) by reflection via the at least partially specular surface (12);
sensing the pattern projected onto the detection face;
evaluating an image, which has been sensed by the detection face (16; 16a; 16b), with regard to a global intensity maximum in a column-by-column manner;
said projecting being implemented such that a line pattern that is a light fan beam is emitted.

16. A computer program having a program code stored thereon to perform the method according to claim 15 when said program runs on a computer.

## Revendications

1. Dispositif (10; 20) de détection de surfaces au moins partiellement réfléchissantes (12; 12a; 12b), aux caractéristiques suivantes:
une surface de détection (16; 16a; 16b);
un moyen d'illumination (14; 14a; 14b) conçu pour projeter un motif par réflexion sur la surface au moins partiellement réfléchissante (12; 12a; 12b) sur la surface de détection (16; 16a; 16b); et
une unité de détection (18; 18') conçue pour détecter le motif projeté sur la surface de détection (16; 16a; 16b) et pour évaluer une image détectée par la surface de détection (16; 16a; 16b) par colonne par rapport à un maximum d'intensité globale;
dans lequel le moyen d'illumination (14; 14a; 14b) comporte un projecteur de lignes conçu pour émettre un motif de lignes, dans lequel le motif de lignes est un faisceau de lumière en éventail.

2. Dispositif selon la revendication 1, dans lequel l'unité de détection (18; 18') est conçue pour détecter le motif projeté sur la surface de détection (16; 16a; 16b) pendant un déplacement relatif en continu entre le moyen d'illumination (14; 14a; 14b) et la surface de détection (16; 16a; 16b) et la surface au moins partiellement réfléchissante (12; 12a; 12b), d'autre part.

3. Dispositif selon la revendication 1 ou 2, dans lequel la surface de détection (16; 16b; 16a) est conçue pour générer une image réelle du motif.

4. Dispositif (10; 20) selon la revendication 3, dans lequel l'unité de détection (18; 18') est conçue pour reproduire le motif projeté sur la surface de détection (16; 16a; 16b) et diffusé par la surface de détection (16; 16a; 16b) sur un capteur d'image (24) et pour le détecter par le capteur d'image (24).

5. Dispositif selon l'une des revendications 2 à 4, comportant par ailleurs une unité d'évaluation (26) conçue pour effectuer une détection d'erreur sur base du motif détecté par l'unité de détection (18; 18').

6. Dispositif (10; 20) selon l'une des revendications précédentes, dans lequel l'unité de détection (18; 18') est une caméra, une caméra de coupe optique ou une caméra de surface.

7. Dispositif (10; 20) selon l'une des revendications 3 à 6, dans lequel l'unité de détection est conçue pour détecter le motif diffusé par la surface de détection (16; 16a; 16b) en transmission ou en réflexion.

8. Dispositif (10; 20) selon l'une des revendications précédentes, comportant par ailleurs une unité de positionnement (32) conçue pour effectuer un déplacement relatif (28) entre le moyen d'illumination (14; 14a; 14b) et la surface de détection (16; 16a; 16b) et la surface au moins partiellement réfléchissante (12; 12a; 12b), d'autre part.

9. Dispositif (10; 20) selon l'une des revendications précédentes, dans lequel le moyen d'illumination (14; 14a; 14b) est conçu pour émettre un rayonnement ultraviolet ou un rayonnement ultraviolet extrême.

10. Dispositif (10; 20) selon l'une des revendications précédentes, dans lequel la surface de détection (16; 16a; 16b) est couplée optiquement par un cône de fibre optique à l'unité de détection (18; 18').

11. Dispositif (10; 20) selon l'une des revendications précédentes, dans lequel le moyen d'illumination (14; 14a; 14b) est conçu pour tenir compte, lors de la projection du motif sur la surface de détection (16; 16a; 16b), d'une distance variable entre le moyen d'illumination (14; 14a; 14b) et la surface au moins partiellement réfléchissante (12; 12a; 12b) et pour focaliser sur la surface de détection (16; 16a; 16b).

12. Dispositif (10; 20) selon l'une des revendications précédentes, dans lequel la surface de détection (16; 16a; 16b) est conçue pour transférer une lumière de mesure ultraviolette ou ultraviolette extrême dans un spectre visible.

13. Dispositif (10; 20) selon l'une des revendications précédentes, dans lequel la surface de détection (16; 16a; 16b) est une surface active d'un capteur d'image (24) et dans lequel aucune optique de reproduction (22) n'est disposée entre la surface au moins partiellement réfléchissante (12; 12a; 12b) et le capteur d'image (24).

14. Système de mesure (30) avec au moins un dispositif (10; 20) de détection de surfaces au moins partiellement réfléchissantes (12; 12a; 12b) selon l'une des revendications 1 à 13 qui est conçu pour mesurer un objet de mesure avec une surface à détecter (12a; 12b).

15. Procédé (100) de détection de surfaces au moins partiellement réfléchissantes (12; 12a; 12b), aux étapes suivantes consistant à:
disposer une surface de détection (16; 16a; 16b);
projeter, par un moyen d'illumination (14; 14a; 14b), un motif par réflexion sur la surface au moins partiellement réfléchissante (12) sur la surface de détection (16; 16a; 16b);
détecter le motif projeté sur la surface de détection;
évaluer une image détectée par la surface de détection (16; 16a; 16b) par colonne par rapport à un maximum d'intensité globale;
dans lequel la projection est réalisée de sorte que soit émis un motif de lignes qui est un faisceau de lumière en éventail.

16. Programme d'ordinateur avec un code de programme pour réaliser le procédé selon la revendication 15 lorsque le programme est exécuté sur un ordinateur.
